# EUROPÄISCHE PATENTSCHRIFT

(11) **EP 0 884 757 B1**
(45) Veröffentlichungstag und Bekanntmachung des Hinweises auf die Patenterteilung: **02.05.2003**
(21) Anmeldenummer: 98114728.3
(22) Anmeldetag: 09.02.1993
(51) Int. Cl.: H01J 29/82, H01J 29/70

(54) **Ablenkeinheit für die Bildröhre in einem Fernsehempfänger**
Deflection unit for a display tube in a television receiver
Unité de déflection pour tube d'affichage de télévision

(30) Priorität: 20.02.1992 DE 4205146; 02.03.1992 DE 4206479; 07.03.1992 DE 4207350
(43) Veröffentlichungstag der Anmeldung: 16.12.1998
(62) Teilanmeldung aus: 93101995.4
(73) Patentinhaber: DEUTSCHE THOMSON-BRANDT GMBH, 78048 Villingen-Schwenningen (DE)
(72) Erfinder: Hirtz, Gangolf, 78078 Niedereschach (DE); Bader, Bernd, 78050 Villingen-Schwenningen (DE); Francois, Yves, Sidcup, Kent DA 14 4 TB (GB); Tenconi, Bernd, 78086 Brigachtal (DE); Ohnemus, Fritz, 78050 Villingen-Schwenningen (DE)
(74) Vertreter: Rossmanith, Manfred, Dr.

(56) Entgegenhaltungen:
- EP-A- 0 456 942
- US-A- 4 401 917
- US-A- 4 547 707
- US-A- 5 028 898
- PATENT ABSTRACTS OF JAPAN vol. 016, no. 059 (E-1166), 14. Februar 1992 & JP 03 257742 A (SANYO ELECTRIC CO LTD), 18. November 1991 & US 5 119 056 A (ITOH ET AL.) 2. Juni 1992
- PATENT ABSTRACTS OF JAPAN vol. 008, no. 078 (E-237), 10. April 1984 & JP 58 223988 A (HITACHI SEISAKUSHO KK), 26. Dezember 1983

## Beschreibung

Die Erfindung betrifft eine Ablenkeinheit für eine Bildröhre, insbesondere eine Ablenkeinheit nach dem Oberbegriff des Anspruchs 1.

Weiterhin betrifft die Erfindung ein Verfahren zur Ermittlung einer besonders geeigneten Position einer Hilfsablenkspule.

Ein System zur Verbesserung der Bildschärfe mit einer derartigen Ablenkeinheit durch Modulation der horizontalen Ablenkgeschwindigkeit in Abhängigkeit vom Videosignal ist beschrieben in "nachrichten elektronik" Nr. 36 (1982), Heft 4, Seite 155 - 158. Bei einem derartigen System wird z.B. bei einem Schwarz/Weiß-Sprung des Videosignals durch Differentiation ein Impuls gewonnen, der die Ablenkgeschwindigkeit vorübergehend erhöht. Bei einem Weiß/Schwarz-Sprung wird durch Differentiation ein negativer Impuls gewonnen, der die Zeilenablenkgeschwindigkeit kurzzeitig verringert. Auf diese Weise werden die Sprünge im Videosignal mit erhöhter Flankensteilheit wiedergegeben. Dies.es System wird auch als BSVM (beam scan velocity modulation) bezeichnet.

Diese Hilfsablenkspule für ein solches System liegt aus geometrischen Gründen im Bereich des hinteren Endes oder über der Zeilenablenkspule. Bedingt durch die enge Lage der beiden Ablenkspulen zueinander entsteht dadurch eine Kopplung zwischen der Zeilenablenkspule und der Hilfsablenkspule. Diese Kopplung kann zu Partialschwingungen des Zeilenablenkstroms, sogenanntem "ringing" führen, die sich durch Bildstörungen am linken Bildrand äußern. Die Partialschwingungen entstehen im wesentlichen dadurch, daß die hochfrequenten Ströme in der Hilfsablenkspule durch die Kopplung auf die Zeilenablenkspule einwirken und diese zu Schwingungen anregen. Derartige Partialschwingungen können auch im Laufe einer Zeile angeregt werden, weil die hochfrequenten Ströme in der Hilfsablenkspule in Abhängigkeit vom Videosignal an jeder beliebigen Stelle der Zeilenhinlaufzeit auftreten können.

Die US 4,401,917 beschreibt eine Bildröhre mit einer Ablenkeinheit und mit einem Konvergenzmagneten, die in einem Klemmring angeordnet sind. Der Einfluß des Konvergenzmagnetfeldes ist veränderbar, weil die Permanentmagnete in dem Klemmring verstellbar gehaltert sind.

Aus der EP 0 456 942 A ist eine Ablenkspulenanordnung bekannt, die zusätzlich Hilfsablenkspulen aufweist. Da beide Spulen auf dem Röhrenhals der Bildröhre angeordnet sind, tritt eine Kopplung der Magnetfelder auf. Bei der bekannten Anordnung sind die Spulen so angeordnet, daß sich das Übersprechen der Magnetfelder von der jeweils einen Spulenart auf die andere gegenseitig aufhebt.

Hiervon ausgehend ist es Aufgabe der Erfindung eine kostengünstige Befestigung der Hilfsablenkspule zu schaffen, wobei die magnetische Kopplung zwischen der Hilfsablenkspule und der Zeilenablenkspule möglichst klein bleiben soll.

Diese Aufgabe wird durch eine Ablenkspule nach Anspruch 1 gelöst.

Bei einem Ausführungsbeispiel der Erfindung wird zur Befestigung der Hilfsablenkspule der zur Arretierung der Ablenkeinheit auf dem Röhrenhals ein Klemmring verwendet. Der Klemmring wird zusätzlich zur Halterung und Lagerung der Hilfsablenkspule oder mehrerer Hilfsablenkspulen ausgenutzt. Dabei wird die Erkenntnis ausgenutzt, daß die axiale Lage der Klemmringes relativ zur Bildröhre etwa der optimalen axialen Lage der Hilfsablenkspule entspricht. Da der Klemmring sehr eng am Bildröhrenhals anliegt, kann auch die vom Klemmring getragene Hilfsablenkspule eng an den Bildröhrenhals herangebracht werden, so daß eine hohe Ablenkempfindlichkeit erzielt wird. Die Hilfsablenkspule ist auch leicht nachträglich an der Bildröhre anbringbar, da der Klemmring als Träger im allgemeinen bereits vorhanden ist. Die Lage der Hilfsablenkspule an dem Klemmring bewirkt außerdem eine gute Entkopplung der Hilfsablenkspule von den eigentlichen Ablenkspulen. Der Klemmring erfüllt also eine Doppelfunktion. Er dient einmal zur Arretierung der Ablenkeinheit an dem Bildröhrenhals und zum anderen als Träger für die Hilfsablenkspule. Erfindungsgemäß ist die Hilfsablenkspule so angeordnet, dass sie von entgegengesetzt gerichteten magnetischen Feldlinien der Zeilenablenkspule in gleichem Maße durchdrungen ist.

Bei einem weiteren Ausführungsbeispiel der Erfindung ist der Klemmring aus einem nicht metallischen Material, insbesondere Kunststoff hergestellt, der magnetisch inaktiv ist. Es hat sich gezeigt, daß auch ein derartiger Kunststoffring mit entsprechend großen Abmessungen eine ausreichende Festigkeit aufweist.

Vorzugsweise sind Ferrit-Stiftkerne radial zum Bildröhrenhals in Bohrungen des Klemmrings eingesetzt und an ihren radial zum Bildröhrenhals weisenden Enden von einer Spule umgeben. Jeweils zwei diametral einander gegenüberliegende derartige Stiftkerne je mit einer Spule bilden dann eine Hilfsablenkspule für die Horizontalrichtung oder Vertikalrichtung. An dem Klemmring können auch zwei derartige Paare von Stiftkernen vorgesehen sein, ein erstes Paar mit waagerecht gerichtetem Magnetfeld zur zusätzlichen Ablenkung in Vertikalrichtung und ein zweites Paar mit senkrecht gerichtetem Magnetfeld für eine zusätzliche Ablenkung in Horizontalrichtung. Die Ablenkempfindlichkeit der Hilfsablenkspule läßt sich dadurch erhöhen, daß die Abmessungen des Stiftkernes an dem dem Röhrenhals abgewandten Ende vergrößert sind, indem der Stiftkern an dieser Stelle, also außerhalb der Spule, eine größere Dicke, Durchmesser oder Länge aufweist. Eine weitere Verbesserung der Ablenkempfindlichkeit läßt sich dadurch erzielen, daß jeweils die dem Bildröhrenhals abgewandten Enden von zwei diametral gegenüberliegenden Stiftkernen über eine magnetisch leitende Brücke miteinander verbunden sind.

Bei einem weiteren Ausführungsbeispiel der Erfindung wird ohne zusätzlichen Schaltungsaufwand die Kopplung zwischen der Hilfsablenkspule und der Zeilenablenkspule und damit die Gefahr von Partialschwingungen im Zeilenablenkstrom verringert. Diese Weiterbildung beruht auf folgender Erkenntnis. In der relativen axialen Lage der Hilfsablenkspule zur Zeilenablenkspule gibt es einen Punkt, gewissermaßen eine neutrale Zone, bei der die Hilfsablenkspule von Feldlinien der Zeilenablenkspule entgegengesetzter Richtung im gleichen Maße durchdrungen wird. Die Summe der wirksamen magnetischen Kraftlinien innerhalb der Fläche der Hilfsablenkspule wird dann null oder sehr gering. Das bedeutet, daß die Kopplung zwischen den beiden Spulen praktisch null oder gering wird und somit auch die Spulen einander nicht mehr elektrisch beeinflussen können. Ein wesentlicher Vorteil besteht darin, daß praktisch kein konstruktiver Mehraufwand benötigt wird und die Verringerung der Kopplung lediglich durch eine besondere geometrische Lage der beiden Spulen zueinander erreicht wird. Wenn die Lage der Hilfsablenkspule in der genannten neutralen Zone einmal empirisch ermittelt ist, gilt sie praktisch für alle Bildröhren einer bestimmten Serie. Ein weiterer Vorteil besteht darin, daß auch keine zusätzlichen elektrischen Schaltungen erforderlich sind. Durch die verringerte Kopplung kann die Hilfsablenkspule eng an der Zeilenablenkspule anliegen, wodurch die Ablenkempfindlichkeit der Hilfsablenkspule erhöht wird.

Eine zweite Aufgabe der Erfindung ist es daher ein Verfahren anzugeben, um eine besonders geeignet Position der Hilfsablenkspule zu ermitteln.

Diese Aufgabe wird durch ein Verfahren nach Anspruch 8 gelöst.

Die Ermittlung der optimalen Lage in der neutralen Zone erfolgt vorzugsweise empirisch. Dabei wird z.B. die Zeilenablenkspule mit einem Ablenkstrom gespeist und die Hilfsablenkspule axial zur Zeilenablenkspule solange verschoben, bis die durch den Ablenkstrom in der Hilfsablenkspule induzierte Spannung ein Minimum aufweist. Durch die minimierte Kopplung zwischen den Spulen kann der Hilfsablenkspule ein größerer Strom zugeführt werden, ohne daß die Gefahr von Partialschwingungen im Zeilenablenkstrom auftritt.

In der Zeichnung sind zwei Ausführungsbeispiele der Erfindung dargestellt. Es zeigen:
- Fig. 1: eine Bildröhre mit der Ablenkeinheit und der Hilfsablenkspule,
- Fig. 2: einen Schnitt durch den Hals der in Fig. 1 dargestellten Bildröhre,
- Fig. 3a, 3b: eine konstruktive Ausbildung des Klemmringes aus Fig. 1 in einer Seitenansicht und einer Draufsicht,
- Fig. 4: eine Bildröhre mit der Ablenkeinheit und der Hilfsablenkspule gemäß einem Ausführungsbeispiel der Erfindung und
- Fig. 5: ein schematisches Schaubild zur Erläuterung der Wirkungsweise der Anordnung aus Fig. 4.

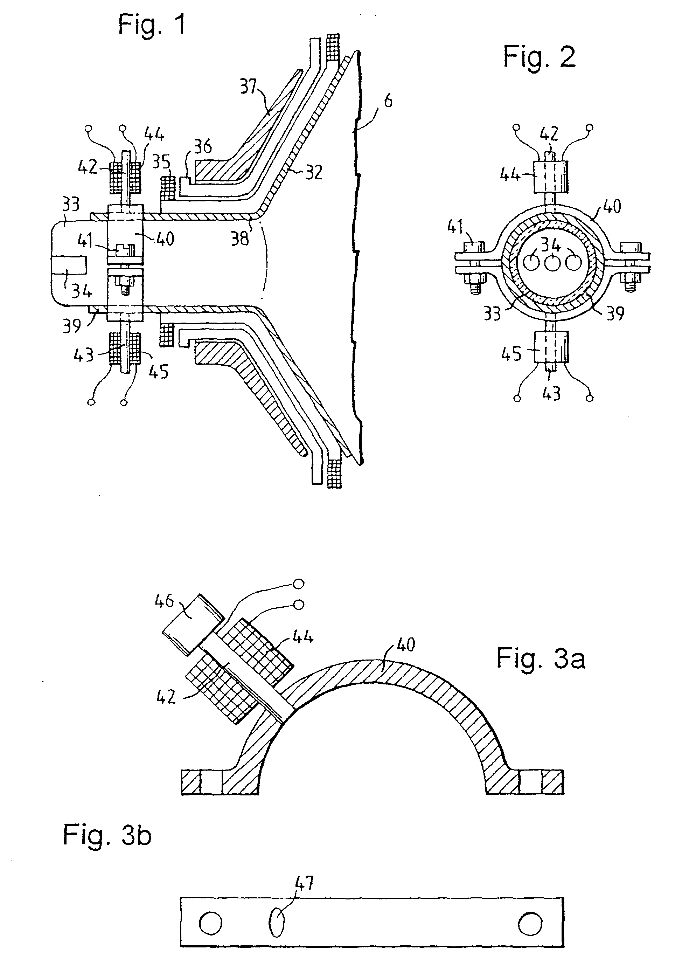

Fig. 1 zeigt die Bildröhre 6 mit dem Bildröhrenkonus 32, dem Röhrenhals 33 und den Elektronenkanonen 34. Auf der Bildröhre 6 sind eine Sattelspule 35 für die Zeilenablenkung, eine Sattelspule 36 für die Vertikalablenkung und ein ringförmiger Ferritkern 37 gelagert. Diese Teile sind von einem Kunststoffgehäuse 38 getragen. An dem Röhrensockel zugewandten Ende läuft das Gehäuse 38 in einen kragenförmigen, radial durch Schlitze nachgiebigen Flansch 39 aus, der eng am Röhrenhals 33 anliegt. Auf diesen Flansch 39 ist der aus zwei gleichen Teilen bestehende Klemmring 40 aufgesetzt. Die beiden Teile sind durch Schrauben 41 zusammengezogen, wodurch das Gehäuse 38 an dem Röhrenhals 33 festgeklemmt wird.

In den Klemmring 40 sind an zwei diametral gegenüberliegenden Stellen zwei Stiftkerne 42, 43 eingesetzt, insbesondere eingeklebt, die je eine Spule 44, 45 tragen. Den Spulen 44, 45 wird ein hochfrequenter zusätzlicher Ablenkstrom zugeführt, der vorzugsweise für eine Modulation der horizontalen Ablenkgeschwindigkeit zwecks Erhöhung der horizontalen Bildschärfe oder für eine Verschiebung jeder zweiten Zeile in Vertikalrichtung um den Abstand zweier Zeilen zur Halbierung der sichtbaren Zeilen und Bildung eines gewünschten dunklen Zwischenraums zwischen den Zeilen dient. In der dargestellten Lage der Kerne wird durch die Hilfsablenkspule im Röhrenhals 33 ein senkrecht gerichtetes Magnetfeld zur zusätzlichen Ablenkung in Horizontalrichtung erzeugt.

Fig. 2 zeigt einen Schnitt durch den Röhrenhals 33. Die Stiftkerne 42, 43 reichen bis auf den äußeren Rand des Flansches 39, werden also zur Erzielung einer hohen Ablenkempfindlichkeit so dicht wie möglich an die von den Kanonen 34 ausgehenden Elektronenstrahlen herangebracht.

Fig. 3a und 3b zeigen eine konstruktive Ausbildung des Klemmringes 40. In eine Bohrung 47 ist der die Spule 44 tragende Stiftkern 42 eingepaßt, insbesondere eingeklebt. Der gesamte Klemmring 40 besteht aus zwei derartigen, identischen Hälften, die spiegelbildlich so zusammengesetzt sind, daß jeweils zwei Stiftkerne relativ zum Bildröhrenhals 33 einander diametral gegenüberliegen. Der Stiftkern 42 hat an seinem dem Röhrenhals 33 angewandten, aus der Spule 44 herausragenden Ende einen Abschnitt 46 mit erhöhtem Durchmesser oder erhöhter Länge. Durch diese Ausbildung kann die Ablenkempfindlichkeit der Hilfsablenkspule erhöht werden. Die Ablenkempfindlichkeit kann auch dadurch erhöht werden, daß die äußeren, vom Röhrenhals 33 abgewandten Enden der Kerne 42, 43 über eine magnetisch leitende Brücke miteinander verbunden werden.

Der Klemmring 40 besteht aus Kunststoff, vorzugsweise einem unter dem Handelsnamen Makralon bekannten Kunststoff. Der Klemmring gemäß Fig. 7 hat z.B. eine Breite von etwa 8 mm. Die Stiftkerne 42, 43 haben z.B. einen Durchmesser von 5 mm und eine Länge von 20 mm.

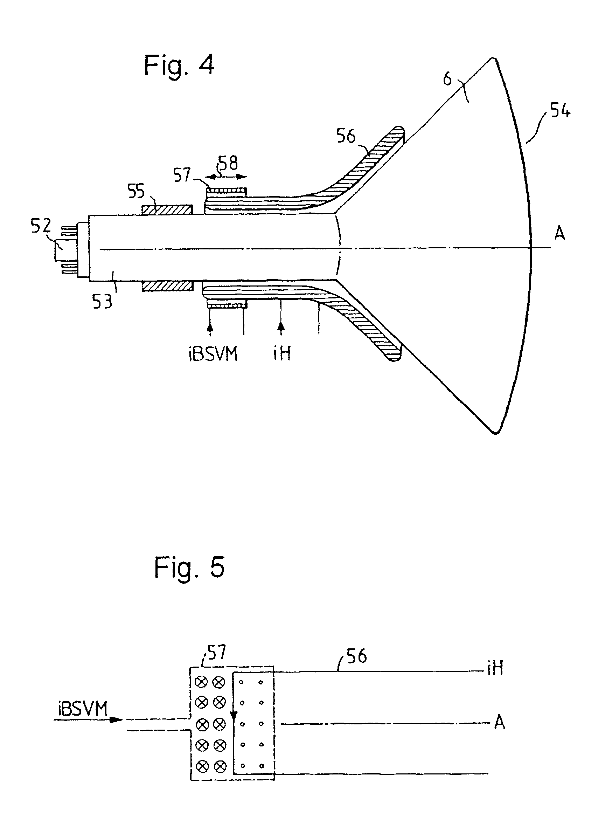

Ein Ausführungsbeispiel der Erfindung wird im folgenden anhand der Fig. 4 und Fig. 5 erläutert.

Fig. 4 zeigt die Bildröhre 6 mit dem Sockel 52, dem Röhrenhals 53, dem Bildschirm 54 und dem Konvergenzmagneten 55. Die Bildröhre 6 trägt die sattelförmige Zeilenablenkspule 56, die mit dem Zeilenablenkstrom iH gespeist wird. Über der Zeilenablenkspule 56 ist im Bereich der Spulenköpfe an dem dem Sockel 52 zugewandten Ende die Hilfsablenkspule 57 zur zusätzlichen Modulation der Zeilenablenkgeschwindigkeit angeordnet, die aus nur wenigen Windungen besteht. Durch Verschieben der Hilfsablenkspule 57 relativ zur Zeilenablenkspule 56 in Richtung 58 wird die Hilfsablenkspule 57 auf eine neutrale Zone eingestellt, bei der die Kopplung zwischen den Spulen 56, 57 minimal ist. Die Hilfsablenkspule 57 wird mit dem Strom iBSVM gesteuert, der in Abhängigkeit vom Videosignal die Zeilenablenkgeschwindigkeit erhöht oder verringert und dadurch eine Erhöhung der Bildschärfe bewirkt.

Die optimale Lage der Hilfsablenkspule 57 in der genannten neutralen Zone wird empirisch folgendermaßen ermittelt. Die Zeilenablenkspule 56 wird in üblichen Weise mit einem Zeilenablenkstrom iH gespeist. Durch die Kopplung zwischen den Spulen 56, 57 erzeugt dieser Strom nach dem Transformatorprinzip in der Hilfsablenkspule 57 eine Spannung. Diese Spannung wird mit einem Meßgerät oder einem Oszilloskop angezeigt. Die Hilfsablenkspule 57 wird jetzt in Richtung 58 so verschoben, bis die Amplitude der in der Spule 57 erzeugten Spannung ein Minimum aufweist. Es ist ebenso möglich, in die Hilfsablenkspule 57 einen Strom einzuspeisen und deren axiale Lage auf ein Minimum der in der Zeilenablenkspule 56 induzierten Spannung einzustellen.

In Fig. 5 wird die Wirkungsweise erläutert, wobei zur Vereinfachung beide Spulen jeweils nur aus einer Windung bestehen. Fig. 5 ist eine Draufsicht auf die Ablenkspulen der mit waagerechter Achse A liegende Bildröhre 6. Die Zeilenablenkspule 56 erzeugt ein Magnetfeld, dessen entgegengesetzt gerichtete magnetische Kraftlinien durch die Punkte und die mit einem Kreuz versehenden Kreise dargestellt sind. Wenn die Hilfsablenkspule 57 auf die genannte neutrale Zone eingestellt ist, wird die von der Spule 57 eingeschlossene Fläche von Kraftlinien mit entgegengesetzter Richtung durchsetzt. Wenn jetzt die Durchflutung der Fläche der Hilfsablenkspule 57 durch die Kraftlinien der einen Richtung und durch die Kraftlinien der anderen Richtung gleich groß ist, ist die Summe der Durchflutung der durch die Hilfsablenkspule 57 gebildeten Fläche praktisch gleich null. Das bedeutet, daß zwischen den beiden Spulen 56, 57 praktisch keine Kopplung mehr besteht und somit der Strom iBSVM der Hilfsablenkspule 57 den Ablenkstrom iH der Zeilenablenkspule 56 nicht mehr beeinflussen und zu Partialschwingungen anregen kann.

Die Hilfsablenkspule 57 ist vorzugsweise als Sattelspule in gedruckter Leitertechnik auf einer flexiblen Folie ausgebildet. Die Spule 57 ist so angeordnet, daß sie im Röhrenhals ein senkrecht gerichtetes Feld für die Ablenkung in Horizontalrichtung erzeugt.

## Patentansprüche

1. Ablenkeinheit für die Bildröhre (6) in einem Fernsehempfänger mit einem die Zeilenablenkspulen (35) und die Vertikalablenkspulen (36) tragenden Gehäuse (38), das mit einem Klemmring (40) am Bildröhrenhals (33) arretiert ist, und mit einer Hilfsablenkspule zur zusätzlichen, höherfrequenten Ablenkung des Elektonenstrahls, wobei der Klemmring (40) die Hilfsablenkspule (44, 45) trägt, **dadurch gekennzeichnet, daß** die Hilfsablenkspule (57) relativ zur Zeilenablenkspule (56) in Achsrichtung (A) der Bildröhre (6) auf eine neutrale Zone eingestellt ist, in der die Hilfsablenkspule (57) von entgegengesetzt gerichteten magnetischen Kraftlinien der Zeilenablenkspule (56) im gleichen Maße durchdrungen ist.

2. Ablenkeinheit nach Anspruch 1, **dadurch gekennzeichnet, daß** der Klemmring (40) aus einem nicht metallischen material hergestellt ist.

3. Ablenkeinheit nach Anspruch 1 oder 2, **dadurch gekennzeichnet, dass** die Hilfsablenkspule (57) in gedruckter Leitertechnik auf einer flexiblen Folie ausgebildet ist.

4. Ablenkeinheit nach Anspruch 1 bis 3, **dadurch gekennzeichnet, dass** die Hilfsablenkspule (57) als Sattelspule ausgebildet ist.

5. Ablenkeinheit nach Anspruch 1, **dadurch gekennzeichnet, daß** die Hilfsablenkspule (44, 45) einen Kern (42, 43) aufweist, der an dessen dem Röhrenhals (33) abgewandten Ende einen Abschnitt (46) mit einem erhöhten Durchmesser aufweist.

6. Ablenkeinheit nach Anspruch 5, **dadurch gekennzeichnet, daß** die äußeren dem Röhrenhals abgewandten Enden der Kerne (42, 43) zweier Hilfsablenkspulen (44, 45) mittels einer magnetischen Brücke miteinander verbunden sind.

7. Ablenkeinheit nach einem oder mehreren der Ansprüche 1 bis 6, **dadurch gekennzeichnet, daß** die Hilfsablenkspule (44, 45, 57) so angeordnet ist, daß diese im Röhrenhals ein senkrecht gerichtetes Feld für die Ablenkung in Horizontalrichtung erzeugt.

8. Verfahren zur Ermittlung der neutralen Zone nach Anspruch 1, **dadurch gekennzeichnet, daß** in die Zeilenablenkspule (56) oder die Hilfsablenkspule (57) ein Strom (iH) eingespeist und die Hilfsablenkspule (57) in Achsrichtung (A) so verschoben wird (58) bis die durch den Strom der Zeilenablenkspule (56) in der Hilfsablenkspule (57) oder durch einen Strom in der Hilfsablenkspule (57) in der Zeilenablenkspule (56) induzierte Spannung eine minimale Amplitude aufweist.

## Claims

1. Deflection unit for the picture tube (6) in a television receiver including a housing (38) carrying the line deflection coils (35) and the vertical deflection coils (36) which is retained on the neck (33) of the picture tube by a clamping ring (40) and including an auxiliary deflection coil for the additional, higher frequency deflection of the electron beam, wherein the clamping ring (40) carries the auxiliary deflection coil (44 - 45),
**characterized in that**
the auxiliary deflection coil (57) is adjusted to a neutral zone relative to the line deflection coil (56) in the axial direction (A) of the picture tube (6), in which the auxiliary deflection coil (57) is traversed in equal measure by oppositely directed magnetic lines of force of the line deflection coil (56).

2. Deflection unit according to claim 1, **characterized in that** the clamping ring (40) is manufactured by a non-metallic material.

3. Deflection unit according to claim 1 or 2, **characterized in that** the auxiliary deflection coil (57) is configured in printed circuit technique on a flexible foil.

4. Deflection unit according to claim 1 to 3, **characterized in that** the auxiliary deflection coil (57) is configured as a saddle coil.

5. Deflection unit according to claim 1, **characterized in that** the auxiliary deflection coil (44, 45) exhibits a core (42, 43) including a section (46) having a greater diameter at the end remote from the neck (33) of the picture tube.

6. Deflection unit according to claim 5, **characterized in that** the outer ends of the cores (42, 43) remote from the tube neck of two auxiliary deflection coils (44, 45) are connected with one another via a magnetic bridge.

7. Deflection unit according to one or several of claims 1 to 6, **characterized in that** the auxiliary deflection coil (44, 45, 57) is arranged in such a way that it produces a vertically orientated field for the deflection in the horizontal direction within the tube neck.

8. Method for determining of the neutral zone in accordance with claim 1, **characterized in that** a current (iH) is fed into the line deflection coil (56) or the auxiliary deflection coil (57) and the auxiliary deflection coil (57) is displaced in the axial direction (58) until such time as the voltage induced by the current of the line deflection coil (56) in the auxiliary deflection coil (57) or by a current in the auxiliary deflection coil (7) in the line deflection coil (56) has a minimum amplitude.

## Revendications

1. Unité de déflection pour tube d'affichage (6) de télévision dotée d'un boîtier (38) supportant les bobines de déviation horizontale (35) et les bobines de déviation verticale (36) calé à l'aide d'un anneau de serrage (40) sur le col du tube d'affichage (33) et dotée d'une bobine de déviation auxiliaire pour une déviation à haute fréquence complémentaire du rayon électronique où l'anneau de serrage (40) supporte la bobine de déviation auxiliaire (44, 45), **caractérisée en ce que** la bobine de déviation auxiliaire (57) est réglée par rapport à la bobine de déviation horizontale (56) dans la direction axiale (A) du tube d'affichage (6) sur une zone neutre dans laquelle la bobine de déviation auxiliaire (57) est pénétrée dans des proportions identiques par des lignes de force magnétiques orientées à l'opposé de la bobine de déviation horizontale.

2. Unité de déflection selon la revendication 1, **caractérisée en ce que** l'anneau de serrage (40) est fabriqué dans un matériau non métallique.

3. Unité de déflection selon la revendication 1 ou 2, **caractérisée en ce que** la bobine de déviation auxiliaire (57) est réalisée sur une feuille flexible selon la technique des circuits imprimés.

4. Unité de déflection selon les revendications 1 à 3, **caractérisée en ce que** la bobine de déviation auxiliaire (57) est réalisée comme une bobine de sellette.

5. Unité de déflection selon la revendication 1, **caractérisée en ce que** la bobine de déviation auxiliaire (44, 45) présente une broche (42, 43) présentant une section (46) d'un diamètre augmenté à l'extrémité orientée à l'opposé du col de tube (33).

6. Unité de déflection selon la revendication 5, **caractérisée en ce que** les extrémités extérieures orientées à l'opposé du col de tube des broches (42, 43) de deux bobines de déviation auxiliaires (44, 45) sont raccordées l'une à l'autre au moyen d'un pont magnétique.

7. Unité de déflection selon une ou plusieurs des revendications 1 à 6, **caractérisée en ce que** la bobine de déviation auxiliaire (44, 45, 57) est placée de sorte à produire un champ orienté verticalement dans le col de tube pour la déviation dans le sens horizontal.

8. Procédé pour déterminer la zone neutre selon la revendication 1, **caractérisé en ce qu**'un courant (iH) est injecté dans la bobine de déviation horizontale (57) ou la bobine de déviation auxiliaire (57) et la bobine de déviation auxiliaire (56) est décalée (58) dans la direction axiale (A) jusqu'à ce que la tension induite par le courant de la bobine de déviation horizontale (56) dans la bobine de déviation auxiliaire (57) ou par un courant de la bobine de déviation auxiliaire (57) dans la bobine de déviation horizontale (56) présente une amplitude minimale.
